# EUROPÄISCHE PATENTSCHRIFT

(11) **EP 1 070 000 B1**
(45) Veröffentlichungstag und Bekanntmachung des Hinweises auf die Patenterteilung: **06.02.2002**
(21) Anmeldenummer: 99915610.2
(22) Anmeldetag: 15.03.1999
(51) Int. Cl.: B60J 5/04, B60R 13/02

(54) **VERSCHLUSSELEMENT FÜR ÖFFNUNGEN IN FAHRZEUGTÜREN**
CLOSURE ELEMENT FOR OPENINGS IN VEHICLE DOORS
ELEMENT DE FERMETURE POUR OUVERTURES MENAGEES DANS DES PORTIERES DE VEHICULE

(30) Priorität: 09.04.1998 DE 19816012
(43) Veröffentlichungstag der Anmeldung: 24.01.2001
(73) Patentinhaber: Volkswagen Aktiengesellschaft, 38436 Wolfsburg (DE)
(72) Erfinder: ZACIECZKI, Martin, D-38550 Isenbüttel (DE)
(86) Internationale Anmeldenummer: EP9901682
(87) Internationale Veröffentlichungsnummer: WO9952727

(56) Entgegenhaltungen:
- EP-A- 0 199 970
- WO-A-96/18515
- WO-A-98/42527
- US-A- 4 469 732

## Beschreibung

Die Erfindung betrifft ein Verschlußelement für Öffnungen in Fahrzeugtüren gemäß Oberbegriff des Anspruches 1.

Moderne Fahrzeugtüren z.B. an einem Personenwagen sind üblicherweise so aufgebaut, daß die Fahrzeugtür im wesentlichen aus einer Türaußenwandung und einer Türinnenwandung hergestellt sind, wobei sich zwischen Türaußenwandung und Türinnenwandung der sog. Naßraum der Fahrzeugtür befindet. In diesen Naßraum kann beispielsweise durch die darüber angeordneten Scheibendichtungen oder auch durch Herunterkurbeln der Scheiben Feuchtigkeit eindringen. Die Türinnenwandung schließt den Fahrgastraum gegenüber diesem Naßraum ab, so daß keine Feuchtigkeit in den Fahrgastraum eindringen kann. Die in den Naßraum eingedrungene Feuchtigkeit kann über im Bodenbereich des Naßraumes angeordnete Öffnungen abgeführt werden.

Da in der Fahrzeugtür eine Reihe von Funktionselementen beispielsweise für die Fenster- und Türbetätigung, für Einbauräume von Lautsprechern oder dgl. angeordnet werden müssen, kann die Türinnenwandung selbst nicht vollflächig dichtend gegenüber dem Fahrgastraum aufgebaut werden. Eine Reihe von Funktionselementen werden heute üblicherweise auf einem sog. Aggregateträger vormontiert angeordnet, der z.B. alle Betätigungselemente für die Tür- und Fensterbetätigung als Montageträger aufnimmt und funktionsgerecht zueinander positioniert und festlegt. Ein derartiger Aggregateträger wird dann in eine entsprechende Öffnung der Türinnenwandung eingesetzt und an dieser festgelegt, wobei die Berandung des Aggregateträgers sowie der hierfür gebildete Ausschnitt der Türinnenwandung bezüglich ihrer Form aufeinander abgestimmt werden können, um nach der WO 96/18515 durch Zwischenlegen eines Dichtungsstranges gleichzeitig eine Abdichtung des Naßraumes gegen den Fahrgastraum schon durch das Einbauen des Aggregateträgers zu erreichen. Diese Abdichtung ist auch erforderlich, um z.B. empfindliche elektrische Antriebe oder sonstige feuchtigkeitsempfindliche Teile im Bereich der Tür auf der dem Fahrgastraum zugewandt liegenden Seite der Türinnenwandung anordnen zu können. Eine andere Möglichkeit zur Abdichtung in der Türinnenwandung notwendiger Öffnungen ist das Einlegen einer feuchtigkeitsdichten Folie zwischen Türinnenwandung bzw.

Aggregateträger und einer auf der Seite des Fahrgastraumes abschließend angeordneten Türinnenverkleidung, wobei die Folie alle Öffnungen überspannt und beispielsweise feuchtigkeitsdicht auf die Türinnenwandung aufgeklebt wird.

Problematisch bei allen diesen Lösungen ist es, daß die Zugänglichkeit des Naßraumes bzw. der im Naßraum angeordneten Funktionsbauteile durch die überspannende Folie bzw. die Abdichtung gleichzeitig mit dem Einbau des Aggregateträgers sehr erschwert wird. Beispielsweise zur Vornahme von Einstell- und Schmierungsarbeiten, für die Prüfung elektrischer Verbindungen z.B. an elektrischen Fensterhebern oder dgl. oder der Schließelektronik bei Zentralverriegelungen ist es erforderlich, Arbeiten an in dem Naßraum angeordneten Elementen auszuführen. Bei Verwendung einer Dichtungsfolie muß diese Dichtungsfolien zumindest teilweise entfernt und nachträglich wieder aufgeklebt oder komplett ersetzt werden. Hierdurch ist eine einwandfreie Abdichtung nicht mehr sicher gewährleistet. Bei der Abdichtung mit dem Aggregateträger muß dieser beispielsweise auch allein bei einer Einstellung des Spieles der Fensterscheibe komplett ausgebaut werden und in der Regel auch die zwischengelegte Dichtung vor dem Wiedereinbau erneuert werden. Der Aufwand und die Kosten hierfür sind beträchtlich.

Es ist daher Aufgabe der vorliegenden Erfindung, eine Ausgestaltung von Abdichtungsmitteln für Öffnungen im Bereich der Fahrzeugtür vorzuschlagen, die ohne großen Aufwand die Zugänglichkeit des Naßraumes der Fahrzeugtür gewährleistet und gleichzeitig eine einfach zu handhabende und üblichen Feuchtigkeitsbelastungen im Naßraum der Fahrzeugtür widerstehende Abdichtung des Naßraumes gegenüber dem Fahrgastraum zu gewährleisten.

Die Lösung dieser Aufgabe ergibt sich aus den kennzeichnenden Merkmalen des Anspruches 1 in Zusammenwirken mit den Merkmalen des Oberbegriffes. Die Unteransprüche beschreiben bevorzugte Weiterbildungen.

Die Erfindung betrifft ein Verschlußelement für Öffnungen an Fahrzeugtüren, wobei die Fahrzeugtür eine Außenwandung und eine Innenwandung mit einem dazwischen angeordneten Naßraum aufweist und in dem Naßraum Funktionsteile angeordnet sind, die vorzugsweise auf einem Aggregateträger vormontierbar und mit diesem in eine Öffnung der Türinnenwandung einsetzbar sind. Ein derartiges Verschlußelement wird erfindungsgemäß dadurch weiterentwickelt, daß das Verschlußelement eine Öffnung in dem Aggregateträger oder der Innenwandung verschließt, indem das Verschlußelement ein der Berandung der Öffnung passend zugeordnetes und diese Berandung umgreifendes erstes Ringteil aufweist, in das eine die Öffnung im wesentlichen vollflächig überdeckende Verschlußkappe lösbar einsteckbar ist. Durch die zweiteilige Gestaltung des Verschlußelementes wird zum einen die Zuordnung des Ringteiles zu der Berandung der Öffnung erleichtert, die beispielsweise in geöffnetem Zustand des Verschlußelementes, also mit entferntem Verschlußdeckel erfolgen kann. Hierdurch wird der Fügevorgang erleichtert. Darüberhinaus verbleibt das Ringteil auch im montierten Zustand an der Berandung der Öffnung, so daß nur der Verschlußdeckel entfernt werden muß, um z.B. bei Wartungs- oder Reparaturarbeiten die Öffnung und ggf. dahinter angeordnete Funktionselemente freizulegen.

Von besonderem Vorteil ist es, wenn das die Berandung umgreifende Ringteil des Verschlußelementes dichtend auf die Berandung der Öffnung aufsteckbar ist und an dem Aggregateträger oder der Innenwandung anliegt. Hierdurch wird die Kontaktstelle zwischen Aggregateträger bzw. Innenwandung und Ringteil abgedichtet und somit ein Austreten von Feuchtigkeit aus dem Naßraum der Fahrzeugtür in den Fahrgastraum sicher verhindert. Eine weitere Abdichtung der Öffnung kann in einer vorteilhaften Ausgestaltung dadurch erfolgen, daß die die Öffnung im wesentlichen vollflächig überdeckende Verschlußkappe dichtend in zugeordnete Bereiche des Ringteiles einsteckbar ist. Hierdurch wird auch die Berührungszone zwischen Ringteil und Verschlußkappe abgedichtet und damit kann die gesamte Öffnung gegenüber Feuchtigkeit dicht gestaltet werden. Trotzdem läßt sich durch einfaches Entfernen des Verschlußdeckels von dem Ringteil die Öffnung z.B. für Wartungszwecke wieder freilegen.

In weiterer Ausgestaltung können zur Abdichtung zwischen Öffnung und Ringteil und/oder zwischen Ringteil und Verschlußkappe jeweils umlaufende, die Lage von Ringteil bzw. Verschlußkappe jeweils kraftschlüssig festlegende Dichtungslippen an Ringteil und/oder Verschlußkappe ausgebildet sein. Hierdurch wird sowohl der korrekte Sitz von Verschlußkappe und Ringteil gewährleistet als auch die Abdichtung über eine z.B. elastisch ausgebildete Dichtungskante erreicht.

Eine Weiterbildung sieht vor, daß das Ringteil eine kreisringförmige Außenform aufweist, die der Form und den Maßen der Öffnung in Aggregateträger bzw. Innenwandung entspricht. Hierdurch läßt sich bei einfacher Herstellung der Dichtungszone am Ringteil gleichzeitig die kürzeste Ausbildung der Dichtzone erreichen, die z.B. für die Zugänglichkeit etwa zu den zu betätigenden Schrauben oder dgl. vollständig gewährleistet. Entsprechend können in anderer Ausgestaltung auch Verschlußkappe und Ringteil kreisringförmige, einander zugeordnete Dichtungsbereiche aufweisen. Es versteht sich von selbst, daß auch andere Formen von Dichtungskanten zwischen Öffnung und Ringteil bzw. zwischen Ringteil und Verschlußdeckel möglich sind.

Für die Erstmontage des Verschlußelementes, aber auch bei weiteren Freilegungen der Öffnung z.B. im Rahmen von Wartungsarbeiten ist es von Vorteil, wenn Ringteil und Verschlußkappe unverlierbar aneinander festgelegt sind. Dies kann bevorzugt dadurch erfolgen, daß Ringteil und Verschlußkappe mit einem scharnierförmigen Abschnitt beweglich aneinander festgelegt sind. Hierdurch kann auch bei einem Abnehmen des Verschlußdeckels von dem Ringteil der Verschlußdeckel nicht verloren gehen.

Für die Sicherheit bei der Handhabung im Bereich der von dem Verschlußelement verschließbaren Öffnung ist es vorteilhaft, wenn das Ringteil auf die Berandung der Öffnung derart aufsteckbar ist, daß die Kanten der Berandung wulstartig übergedeckt sind. Hierdurch wird vermieden, daß man sich bei Arbeiten im Bereich der Öffnung an den teilweise scharfkantigen Rändern der Öffnung verletzt, da diese vollständig von dem Ringteil umgriffen werden. Hierzu kann das Ringteil beispielsweise eine umlaufend außenliegende Nut aufweisen, in die die Berandung der Öffnung eingesteckt wird bzw. die Nut auf die Berandung der Öffnung aufgesteckt wird.

Besonders gut zu handhaben ist das Verschlußelement, wenn das Verschlußelement aus einem teilvulkanisierten Gummiwerkstoff oder einem elastischen Kunststoffmaterial gebildet ist, das flexibel auf die Öffnung aufzustecken ist und in dem einfach entsprechend kraftschlüssig wirkende und abdichtende Bereiche einstückig vorgesehen werden können.

Eine besonders vorteilhafte Ausbildung zeigt die Zeichnung.

Es zeigt:
- Fig. 1: eine Ansicht einer Fahrzeugtür von dem Fahrgastraum aus gesehen mit einem schematisch angedeuteten Aggregateträger und zwei erfindungsgemäßen Verschlußelementen im Bereich der Klemmbacken für die Seitenscheiben
- Fig. 2: einen Schnitt durch ein erfindungsgemäßes Verschlußelement mit abgehobenem Verschlußdeckel
- Fig. 3: einen Schnitt durch ein erfindungsgemäßes Verschlußelement mit eingestecktem Verschlußdeckel

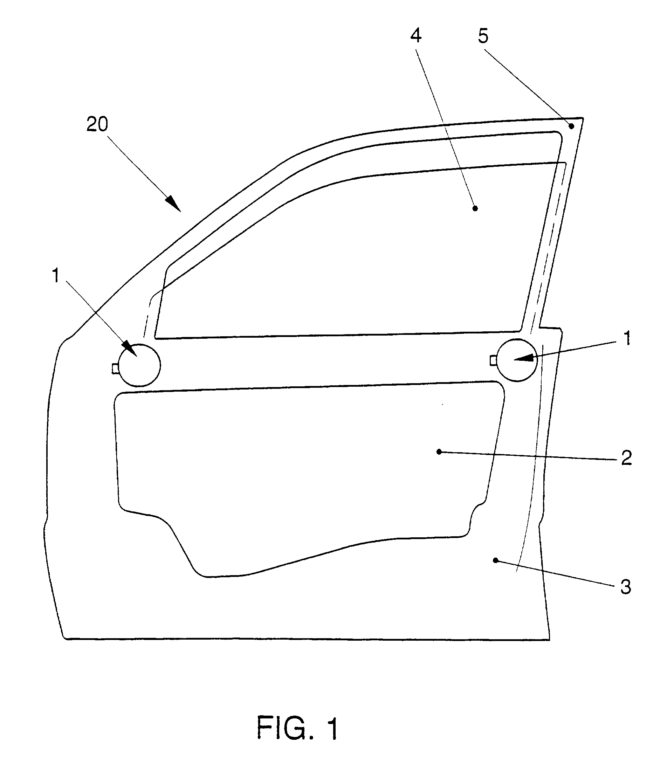

In der Figur 1 ist eine Ansicht einer Fahrzeugtür 20 von dem Fahrgastraum eines Kraftfahrzeuges, beispielsweise eines Personenwagens aus gesehen mit einem schematisch angedeuteten, aus einem Blech bestehenden Aggregateträger 2 und zwei erfindungsgemäßen Verschlußelementen 1 im Bereich von nicht dargestellten Klemmbacken für die Seitenscheibe 4 dargestellt. Die Fahrzeugtür 20 besteht aus einer innenseitig sichtbaren blechförmigen Innenwandung 3, in die eine zur Außenform des Aggregateträgers 2 passende Öffnung eingebracht ist, die bei der Montage des Aggregateträgers 2 von diesem dichtend verschlossen wird. Zwischen der sichtbaren Innenwandung 3 und einer in dieser Figur nicht sichtbaren Außenwandung 6 ist ein in dieser Figur ebenfalls nicht sichtbarer Naßraum 18 gebildet, in den beispielsweise durch ein Herunterkurbeln der Seitenscheibe 4 Wasser eintreten kann und der durch die Innenwandung 3 vom Fahrgastraum abgetrennt wird. In diesem Naßraum 18 können verschiedene, hier nicht weiter dargestellte Funktionsbauteile, z.B. die Mechanik für die Verstellung der Seitenscheibe 4 oder auch elektrische und elektronische Bauteile z.B. für einen elektrischen Fensterheber, einen Seitenairbag oder dgl. angeordnet sein. Derartige Funktionsbauteile werden üblicherweise auf der dem Naßraum 18 zugewandten Seite des Aggregateträgers 2 vormontiert und mit dem Aggregateträger 2 in die Öffnung und damit den Naßraum 18 eingebaut. Eine derartige Vorgehensweise erlaubt eine kostensparende und einfach durchzuführende Vormontage der Funktionsbauteile und reduziert damit die Kosten für die Endmontage der Fahrzeugtür 20.

Es ist jedoch auch schon bei der Montage des Aggregateträgers 2, insbesondere aber auch bei Inspektions- oder Wartungsarbeiten im Laufe der Lebensdauer des mit der Fahrzeugtür 20 versehenen Fahrzeuges immer wieder einmal notwendig, einzelne dieser Funktionsbauteile zu inspizieren, zu warten oder auch zu reparieren. Beispielsweise ist es ggf. erforderlich, für die Bewegung der Seitenscheibe 4 notwendige Scheibenklemmbacken einzustellen oder nachzuziehen, um eine einwandfreie Funktion der Mechanik der Seitenscheibe zu gewährleisten. Ist die Innenseite der Fahrzeugtür 20 durch Innenwandung 3 und Aggregateträger 2 vollständig dicht geschlossen ausgeführt, so muß für derartige Arbeiten, bei denen beispielsweise nur eine Schraube nachgestellt werden muß, der ganze Aggregateträger 2 von der Innenwandung 3 entfernt werden, um an die Schraube oder dgl. überhaupt heran zu kommen. Die Demontage, neue Eindichtung und Montage des Aggregateträgers 2 ist dabei wesentlich aufwendiger als die eigentliche Wartungsarbeit an dem Funktionsbauteil. Durch eine derartige wartungsunfreundliche Gestaltung von Innenwandung 3 und Aggregateträger 2 sind die für die Wartung entstehenden Kosten beträchtlich.

Bei Verwendung der erfindungsgemäßen Verschlußelemente 1 an den Stellen der Fahrzeugtür 20, an denen z.B. regelmäßig ein Zugang in den Naßraum 18 der Fahrzeugtür 20 erforderlich werden kann, kann der Aufwand für das Zugänglichmachen z.B. der Einstellschrauben für die Fensterklemmbacken oder dgl. wie in der Figur 1 deutlich reduziert werden, da nur noch die Verschlußdeckel 7 der Verschlußelemente 1 herausgezogen werden müssen, um z.B. an die Klemmschrauben heranzukommen. Darüber hinaus bilden die Verschlußelemente 1 einen Schutz bei der Durchführung dieser Arbeiten, da die Teile der Verschlußelemente 1 stets an den Berandungen 19 der Öffnungen in Innenwandung 3 oder Aggregateträger 2 verbleiben und daher ein Schneiden an den üblicherweise scharfkantigen Berandungen 19 des Bleches rund um die Öffnung verhindert wird.

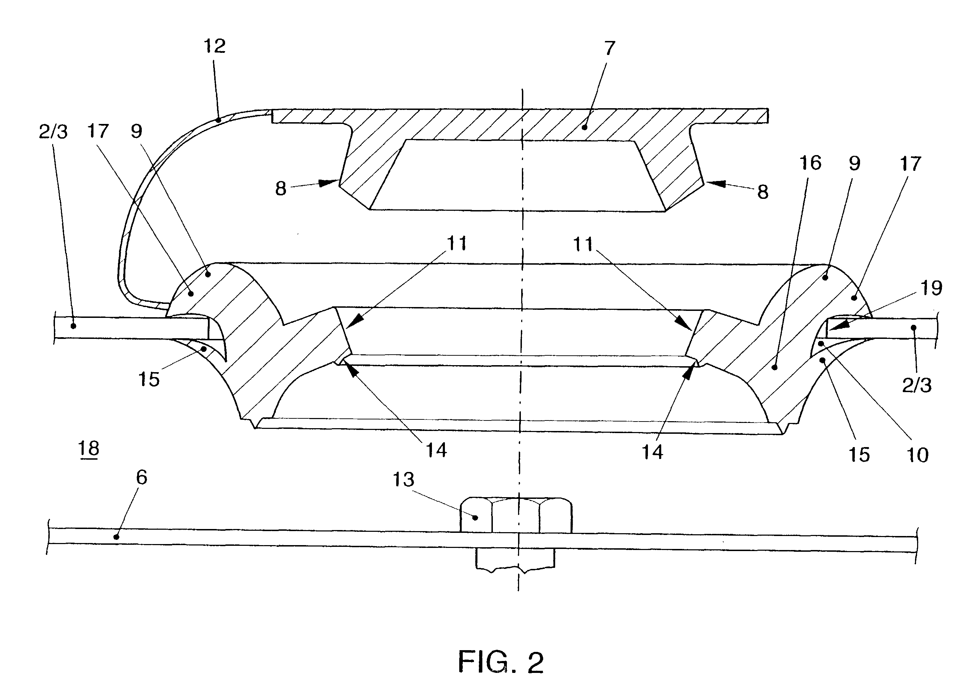

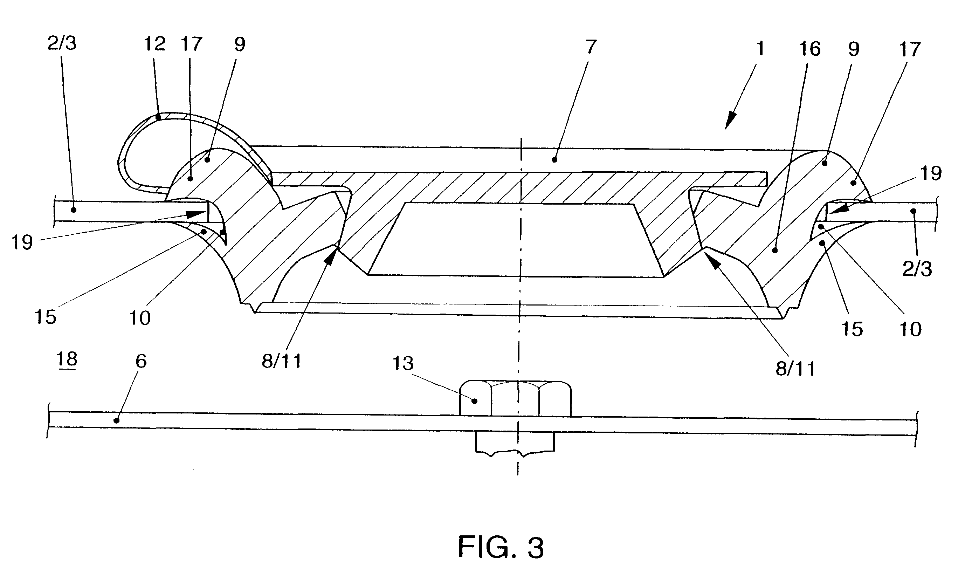

Die Gestaltung einer bevorzugten Ausführungsform der erfindungsgemäßen Verschlußelemente 1 läßt sich aus den Figuren 2 und 3 erkennen.

In der Figur 2 ist ein Schnitt durch ein erfindungsgemäßes Verschlußelement 1 mit abgehobenem Verschlußdeckel 7 dargestellt, in dem die Zuordnung von Verschlußdeckel 7, Ringteil 16 und der Berandung 19 der Öffnung zu erkennen ist. Das Verschlußelement 1 besteht aus einem Ringteil 16, das in dieser Ausführungsform etwa kreissysmmetrisch ausgebildet ist, aber auch jede andere, an die Berandung 19 der Öffnung angepaßte Umfangsform aufweisen kann. Der Querschnitt des Ringteiles 16 weist der Berandung 19 zugewandt eine Nut 10 zur Aufnahme der Berandung 19 auf, die durch einen unterseitigen Nutrand 15 und einen oberseitigen Nutrand 17 begrenzt wird. Die Nutränder 15 bzw. 17 sind elastisch ausgebildet und liegen im nichtmontierten Zustand des Ringteiles 16 so voneinander beabstandet, daß ein Aufstecken der Nut 10 auf die Berandung 19 erfolgen kann und die Nutränder 15, 17 durch ihre elastische Verformung sich kraftschlüssig an die Oberseite und die Unterseite der Innenwandung 3 bzw. des Aggregateträgers 2 anlegen, in denen die Öffnung gebildet sein kann. Hierdurch wird das Ringteil 16 nach dem Einstecken in die Öffnung sicher an der Berandung 19 der Öffnung gehalten und gleichzeitig bilden die Nutränder 15, 17 eine Abdichtung gegen Durchtritt von Feuchtigkeit aus dem zwischen Innenwandung 3 und Außenwandung 6 gebildeten Naßraum 18 der Fahrzeugtür 20.

Oberhalb des Nutrandes 17 ist an dem Ringteil 16 ein Wulst 9 angeordnet, der sich in Richtung auf den Fahrgastraum deutlich vorwölbt und die unter Umständen scharfkantige Berandung 19 gemeinsam mit dem Nutrand 17, diese Berandung 19 vollständig umgreifend abdeckt. Hierdurch kann der Ringteil 16 des Verschlußelementes 1 neben der Abdichtung im Bereich der Berandung 19 auch als Schutz gegenüber Verletzung bei der Handhabung mit der Fahrzeugtür 20 wirken, die ansonsten bei offen und verletzungsträchtig liegenden Berandungen 19 auftreten können.

Der Nut 10 innenliegend benachbart sind an dem Ringteil 16 eine umlaufende Dichtungszone 11 und eine umlaufende Dichtlippe 14 angeordnet, die für ein Zusammenwirken mit dem in Figur 2 abgehoben dargestellten Verschlußdeckel 7 bestimmt sind. Diese Dichtungszone 11 und die Dichtlippe 14 verformen sich beim Einstecken des Verschlußdeckels 7 elastisch und umgreifen den gemäß Figur 3 in das Ringteil 16 eingesteckten Verschlußdeckel 7 derart, daß der Verschlußdeckel 7 zumindest kraftschlüssig gehalten ist. Gleichzeitig wird auch dieser Kontaktbereich zwischen Verschlußdeckel 7 und Ringteil 16 gegenüber Flüssigkeitsdurchtritt aus dem Naßraum 18 abgedichtet.

Verschlußdeckel 7 und Ringteil 16 sind über eine flexible Lasche 12 aneinander unverlierbar festgelegt, so daß auch nach Abnehmen des Verschlußdeckels 7 der Verschlußdeckel 7 nicht herunterfallen oder verloren gehen kann. Die Lasche 12 kann dabei einstückig mit dem Ringteil 16 und dem Verschlußdeckel 7 beispielsweise bei einer Formgebung durch Kunststoffspritzen oder Vulkanisieren von Gumnmiwerkstoffen angeformt werden.

Die Funktion des erfindungsgemäßen Verschlußelementes 1 läßt sich wie folgt kurz beschreiben. Ein Verschlußelement 1 kann überall dort an der Fahrzeugtür 20 angeordnet werden, wo beispielsweise auch nach der Endmontage der Fahrzeugtür 20 weiterhin ein Zugang zu im Bereich des Naßraumes 18 angeordneten Funktionsbauteilen, hier z.B. nur schematisch als Schraube 13 angedeutet, erforderlich ist. Hierzu wird in der Innenwandung 3 oder dem Aggregateträger 2 eine passende Öffnung vorgesehen, durch die hindurch die erforderliche Verrichtung an dem Funktionsbauteil möglich ist. Passend zu dieser Öffnung wird ein Verschlußelement 1 vorgesehen, das aus dem Ringteil 16 und dem Verschlußdeckel 7 besteht und auf die Berandung 19 der Öffnung auf- bzw. in die Öffnung eingesteckt werden kann. Hierbei wird die Berandung 19 der Öffnung in die Nut 10 des Ringteiles 16 eintreten und das Ringteil 16 an der Berandung 19 kraftschlüssig festgelegt. Dies kann sowohl mit als auch ohne in dem Ringteil 16 angeordneten Verschlußdeckel 7 erfolgen. Wird ein Durchführen der Verrichtung notwendig, für die die Öffnung in der Innenwandung 3 oder dem Aggregateträger 2 vorgesehen worden ist, wird einfach der Verschlußdeckel 7 aus dem Ringteil 16 herausgezogen, die Verrichtung durchgeführt und der Verschlußdeckel 7 wieder in das Ringteil 16 eingesteckt. Hierdurch ist ein Feuchtigkeitsdurchtritt ohne notwendige erneute Abdichtungsarbeiten sicher verhindert.

### BEZUGSZEICHENLISTE

- 1: Verschlußelement
- 2: Aggregateträger
- 3: Innenwandung
- 4: Seitenscheibe
- 5: Türrahmen
- 6: Außenwandung
- 7: Verschlußdeckel
- 8: Dichtungszone Verschlußdeckel
- 9: Wulst
- 10: Nut
- 11: Dichtungszone Verschlußdeckel
- 12: Lasche
- 13: Schraubenkopf
- 14: Dichtlippe
- 15: Nutrand
- 16: Ringteil
- 17: Nutrand
- 18: Naßraum
- 19: Berandung Öffnung
- 20: Fahrzeugtür

## Patentansprüche

1. Verschlußelement (1) für Öffnungen an Fahrzeugtüren, wobei die Fahrzeugtür eine Aussenwandung (6) und eine Innenwandung (3) mit einem dazwischen angeordneten Naßraum (18) aufweist und in dem Naßraum (18) Funktionsteile (13) angeordnet sind, die vorzugsweise auf einem Aggregateträger (2) vormontierbar und mit diesem in eine Öffnung der Innenwandung (3) einsetzbar sind,
**dadurch gekennzeichnet, daß**
das Verschlußelement (1) eine Öffnung in dem Aggregateträger (2) oder der Innenwandung (3) verschließt, indem das Verschlußelement (1) ein der Berandung (19) der Öffnung passend zugeordnetes und diese Berandung (19) umgreifendes Ringteil (16) aufweist, in das ein die Öffnung im wesentlichen vollflächig überdeckender Verschlußdeckel (7) lösbar einsteckbar ist.

2. Verschlußelement (1) nach Anspruch 1, **dadurch gekennzeichnet, daß** das die Berandung (19) umgreifende Ringteil (16) des Verschlußelementes (1) dichtend auf die Berandung (19) der Öffnung aufsteckbar ist und an dem Aggregateträger (2) oder der Innenwandung (3) anliegt.

3. Verschlußelement (1) nach einem der Ansprüche 1 oder 2, **dadurch gekennzeichnet, daß** der die Öffnung im wesentlichen vollflächig überdeckende Verschlußdeckel (7) dichtend in zugeordnete Bereiche (11, 14) des Ringteiles (16) einsteckbar ist.

4. Verschlußelement (1) nach einem der Ansprüche 2 oder 3, **dadurch gekennzeichnet, daß** zur Abdichtung zwischen Berandung (19) der Öffnung und Ringteil (16) und/oder zwischen Ringteil (16) und Verschlußdeckel (7) jeweils umlaufende, die Lage von Ringteil (16) bzw. Verschlußdeckel (7) jeweils kraftschlüssig festlegende Dichtungslippen (8, 14, 15, 17) an Ringteil (16) und/oder Verschlußdeckel (7) ausgebildet sind.

5. Verschiußelement (1) nach einem der vorstehenden Ansprüche, **dadurch gekennzeichnet, daß** das Ringteil (16) eine kreisringförmige Außenform aufweist.

6. Verschlußelement (1) nach einem der vorstehenden Ansprüche, **dadurch gekennzeichnet, daß** Verschlußdeckel (7) und Ringteil (16) kreisringförmige, einander zugeordnete Dichtungsbereiche (8, 11) aufweisen.

7. Verschlußelement (1) nach einem der vorstehenden Ansprüche, **dadurch gekennzeichnet, daß** Ringteil (16) und Verschlußdeckel (7) unverlierbar aneinander festgelegt sind.

8. Verschlußelement (1) nach Anspruch 7, **dadurch gekennzeichnet, daß** Ringteil (16) und Verschlußdeckel (7) mit einem scharnierförmigen Abschnitt (12) beweglich aneinander festgelegt sind.

9. Verschlußelement (1) nach einem der vorstehenden Ansprüche, **dadurch gekennzeichnet, daß** das Ringteil (16) auf die Berandung (19) der Öffnung derart aufsteckbar ist, daß die Kanten der Berandung (19) wulstartig (9) übergedeckt sind.

10. Verschlußelement (1) nach Anspruch 9, **dadurch gekennzeichnet, daß** das Ringteil (16) eine umlaufend außenliegende Nut (10) aufweist und die Nut (10) auf die Berandung (19) der Öffnung aufsteckbar ist.

11. Verschlußelement (1) nach einem der vorstehenden Ansprüche, **dadurch gekennzeichnet, daß** das Verschlußelement (1) aus einem teilvulkanisierten Gummiwerkstoff oder einem elastischen Kunststoffmaterial gebildet ist.

12. Verschlußelement (1) nach einem der vorstehenden Ansprüche, **dadurch gekennzeichnet, daß** im Bereich des Naßraumes (18) und erreichbar durch die von dem Verschlußelement (1) überdeckte Öffnung ein Funktionselement (13) der Fahrzeugtür angeordnet ist.

## Claims

1. Closure element (1) for openings on vehicle doors, the vehicle door having an outer wall (6) and an inner wall (3) with a wet space (18) arranged in between, and in the wet space (18) are arranged functional parts (13) which can preferably be pre-assembled on a unit carrier (2) and can be inserted together with the latter into an opening of the inner wall (3), **characterized in that** the closure element (1) closes an opening in the unit carrier (2) or the inner wall (3) by the closure element (1) having an annular part (16) which is assigned to the rim (19) of the opening in a manner fitting the said rim and grips around this rim (19) and into which a closure cover (7) which essentially covers the full area of the opening can be inserted in a releasable manner.

2. Closure element (1) according to Claim 1, **characterized in that** the annular part (16) of the closure element (1), which annular part grips around the rim (19), can be pushed in a sealing manner onto the rim (19) of the opening and bears against the unit carrier (2) or the inner wall (3).

3. Closure element (1) according to either of Claims 1 or 2, **characterized in that** the closure cover (7) which essentially covers the entire area of the opening can be inserted in a sealing manner into associated regions (11, 14) of the annular part (16).

4. Closure element (1) according to either of Claims 2 or 3, **characterized in that**, in order to provide a seal between the rim (19) of the opening and annular part (16) and/or between the annular part (16) and closure cover (7), sealing lips (8, 14, 15, 17) which are in each case encircling and in each case secure the position of the annular part (16) and closure cover (7) in a frictional manner are formed on the annular part (16) and/or closure cover (7).

5. Closure element (1) according to one of the preceding claims, **characterized in that** the annular part (16) has an outer shape in the form of a circular ring.

6. Closure element (1) according to one of the preceding claims, **characterized in that** the closure cover (7) and annular part (16) have sealing regions (8, 11) which are in the form of a circular ring and are assigned to each other.

7. Closure element (1) according to one of the preceding claims, **characterized in that** the annular part (16) and closure cover (7) are secured captively to each other.

8. Closure element (1) according to Claim 7, **characterized in that** the annular part (16) and closure cover (7) are secured moveably to each other by a section (12) in the form of a hinge.

9. Closure element (1) according to one of the preceding claims, **characterized in that** the annular part (16) can be pushed onto the rim (19) of the opening in such a manner that the edges of the rim (19) are covered in a bead-like manner (9).

10. Closure element (1) according to Claim 9, **characterized in that** the annular part (16) has an encircling, outer groove (10), and the groove (10) can be pushed onto the rim (19) of the opening.

11. Closure element (1) according to one of the preceding claims, **characterized in that** the closure element (1) is formed from a partially vulcanized rubber material or a flexible plastic material.

12. Closure element (1) according to one of the preceding claims, **characterized in that** a functional element (13) of the vehicle door is arranged in the region of the wet space (18) and in a manner such that it can be reached through the opening covered by the closure element (1).

## Revendications

1. Elément de fermeture (1) pour des ouvertures ménagées dans des portières de véhicule, la portière de véhicule présentant une paroi extérieure (6) et une paroi intérieure (3) avec un espace humide (18) disposé entre celles-ci et des pièces de fonction (13) étant disposées dans l'espace humide (18), qui peuvent de préférence être prémontées sur un support d'équipements (2) et qui peuvent être logées avec celui-ci dans une ouverture de la paroi intérieure (3), **caractérisé en ce que** l'élément de fermeture (1) ferme une ouverture dans le support d'équipements (2) ou dans la paroi intérieure (3), par le fait que l'élément de fermeture (1) présente une pièce annulaire (16) s'adaptant au bord (19) de l'ouverture et coiffant ce bord (19), dans laquelle peut s'emboîter de façon démontable un couvercle de fermeture (7) couvrant sensiblement toute la surface de l'ouverture.

2. Elément de fermeture (1) suivant la revendication 1, **caractérisé en ce que** la pièce annulaire (16) de l'élément de fermeture (1), qui coiffe le bord (19), peut être clippée hermétiquement sur le bord (19) de l'ouverture et est appliquée sur le support d'équipements (2) ou sur la paroi intérieure (3).

3. Elément de fermeture (1) suivant l'une des revendications 1 ou 2, **caractérisé en ce que** le couvercle de fermeture (7) couvrant sensiblement toute la surface de l'ouverture peut être emboîté hermétiquement dans des régions associées (11, 14) de la pièce annulaire (16).

4. Elément de fermeture (1) suivant l'une des revendications 2 ou 3, **caractérisé en ce que**, pour assurer l'étanchéité entre le bord (19) de l'ouverture et la pièce annulaire (16) et/ou entre la pièce annulaire (16) et le couvercle de fermeture (7), des lèvres d'étanchéité périphériques respectives (8, 14, 15, 17), fixant par blocage la position de la pièce annulaire (16), respectivement du couvercle de fermeture (7), sont façonnées sur la pièce annulaire (16) et/ou sur le couvercle de fermeture (7).

5. Elément de fermeture (1) suivant l'une quelconque des revendications précédentes, **caractérisé en ce que** la pièce annulaire (16) présente une forme extérieure annulaire ronde.

6. Elément de fermeture (1) suivant l'une quelconque des revendications précédentes, **caractérisé en ce que** le couvercle de fermeture (7) et la pièce annulaire (16) présentent des zones d'étanchéité (8, 11) annulaires rondes, associées les unes aux autres.

7. Elément de fermeture (1) suivant l'une quelconque des revendications précédentes, **caractérisé en ce que** la pièce annulaire (16) et le couvercle de fermeture (7) sont attachés l'un à l'autre de façon imperdable.

8. Elément de fermeture (1) suivant la revendication 7, **caractérisé en ce que** la pièce annulaire (16) et le couvercle de fermeture (7) sont attachés l'un à l'autre de façon mobile avec une portion en forme de charnière (12).

9. Elément de fermeture (1) suivant l'une ou l'autre des revendications précédentes, **caractérisé en ce que** la pièce annulaire (16) peut être clippée sur le bord (19) de l'ouverture de manière telle que les arêtes du bord (19) soient recouvertes à la manière d'un bourrelet (9).

10. Elément de fermeture (1) suivant la revendication 9, **caractérisé en ce que** la pièce annulaire (16) présente une rainure extérieure périphérique (10) et la rainure (10) peut être clippée sur le bord (19) de l'ouverture.

11. Elément de fermeture (1) suivant l'une quelconque des revendications précédentes, **caractérisé en ce que** l'élément de fermeture (1) est formé en une matière caoutchouteuse partiellement vulcanisée ou en une matière synthétique élastique.

12. Elément de fermeture (1) suivant l'une quelconque des revendications précédentes, **caractérisé en ce qu'**un élément fonctionnel (13) de la portière de véhicule est disposé dans la région de l'espace humide (18) et est accessible à travers l'ouverture couverte par l'élément de fermeture (1).
